# EUROPÄISCHE PATENTSCHRIFT

(11) **EP 3 036 984 B1**
(45) Veröffentlichungstag und Bekanntmachung des Hinweises auf die Patenterteilung: **20.02.2019**
(21) Anmeldenummer: 15003434.6
(22) Anmeldetag: 02.12.2015
(51) Int. Cl.: A01D 34/416

(54) **FADENMÄHKOPF FÜR EINEN FREISCHNEIDER**
STRING MOWER HEAD FOR A STRING MOWER
TETE FAUCHEUSE POUR UNE DEBROUSSAILLEUSE

(30) Priorität: 23.12.2014 DE 102014019548
(43) Veröffentlichungstag der Anmeldung: 29.06.2016
(73) Patentinhaber: Andreas Stihl AG & Co. KG, 71336 Waiblingen (DE)
(72) Erfinder: Sven, Lang, D-73732 Esslingen (DE); Achim, Rethaber, D-70372 Stuttgart (DE)
(74) Vertreter: Wasmuth, Rolf

(56) Entgegenhaltungen:
- EP-A2- 1 795 062
- EP-A2- 2 099 280
- DE-A1- 19 835 504
- US-A1- 2004 134 078
- US-A1- 2011 302 793

## Beschreibung

Die Erfindung betrifft einen Fadenmähkopf zur Montage an der Antriebswelle eines Freischneiders nach dem Oberbegriff des Anspruchs 1.

Aus der DE 198 35 504 A1 ist ein Fadenmähkopf mit einer Fadenspule bekannt, bei dem in einer vorgegebenen Drehlage durch eine Wandöffnung in der Umfangswand des Gehäuses ein Schneidfaden eingesteckt und durch manuelles Drehen der Fadenspule aufgespult werden kann. Das becherförmige Gehäuse weist in der Umfangswand eine erste Wandöffnung und eine zweite Wandöffnung für je einen aufzuwickelnden Schneidfaden auf. Die Fadenspule weist eine Nabe auf, auf der eine scheibenförmige Trennwand angeordnet ist. Die Trennwand teilt die Fadenspule in einen ersten oberen Wickelabschnitt und einen zweiten unteren Wickelabschnitt auf, wobei in der Trennwand ein fadenführender Fadenkanal ausgebildet ist, in den über einen fadenführenden Fadeneintrittsabschnitt der aufzuspulende Schneidfaden eingesteckt werden kann. Der Fadeneintrittsabschnitt weist eine Längsmittelachse auf, die auf einer Radialen durch die Drehachse der Nabe verläuft und in der vorgegebenen Drehlage der Fadenspule durch die Wandöffnung in der Umfangswand des Gehäuses verläuft.

Zum Aufspulen eines Schneidfadens wird in jede Wandöffnung der Endabschnitt eines Schneidfadens eingesteckt, wobei der Fadenkanal den Schneidfaden um 90° umlenkt und verklemmt. Dadurch wird beim Drehen der Fadenspule der Schneidfaden in das Gehäuse eingezogen und auf einen zugeordneten Wickelabschnitt der Fadenspule aufgespult.

Um eine Fadenspule neu zu bewickeln, muss durch jede Wandöffnung ein Schneidfaden eingesteckt werden, was aufwendig ist. Beim Aufwickeln muss dabei sichergestellt werden, dass beide eingesteckte Schneidfadenenden sicher gefasst und zugleich aufgewickelt werden.

Aus der US 2011/0302793 A1 ist ein Fadenmähkopf zur Montage an der Antriebswelle eines Freischneiders bekannt, der aus einem becherförmigen Gehäuse mit einer Umfangswand besteht, in der eine Wandöffnung für einen Schneidfaden ausgebildet ist. Im Gehäuse ist eine Fadenspule für den Schneidfaden angeordnet, wobei die Fadenspule relativ zum Gehäuse drehbar ist. Die Nabe trägt eine scheibenförmige Trennwand, die die Fadenspule in einen ersten, oberen Wickelabschnitt und einen zweiten, unteren Wickelabschnitt aufteilt. In der Trennwand ist ein fadenführender Fadenkanal ausgebildet, der einen im Rand der Trennwand liegenden, fadenführenden Fadeneintrittsabschnitt aufweist. Der Fadeneintrittsabschnitt weist eine Längsmittelachse auf, die auf einer ersten Radialen liegt, welche durch die Drehachse der Nabe verläuft. Eine gedachte Verlängerung der Längsmittelachse des Fadeneintrittsabschnitts verläuft in einer vorgegebenen Drehlage der Fadenspule durch die Wandöffnung in der Umfangswand des Gehäuses. Der fadenführende Fadenkanal erstreckt sich ausgehend von dem Fadeneintrittsabschnitt an der Nabe vorbei bis zu einem gegenüberliegenden fadenführenden Fadenaustrittsabschnitt im Rand der Trennwand. Dabei ist dem fadenführenden Fadenaustrittsabschnitt eine weitere Wandöffnung in der Umfangswand des Gehäuses zugeordnet.

Der Erfindung liegt die Aufgabe zugrunde, einen Fadenmähkopf für einen Freischneider derart auszubilden, dass das Einstecken und das Aufwickeln des Schneidfadens vereinfacht und funktionssicher sind.

Die Aufgabe wird nach den kennzeichnenden Merkmalen des Anspruchs 1 gelöst.

Die Konstruktion ist so vorgesehen, dass der fadenführende Fadenaustrittsabschnitt zu der Längsmittelachse des fadenführenden Fadeneintrittsabschnitts in der Ebene der Trennwand - bezogen auf die Umfangsrichtung der Nabe - einen seitlichen Versatz aufweist. Dabei liegen die Mündung des Fadeneintrittsabschnitts und die Mündung des Fadenaustrittsabschnitts innerhalb des Außendurchmessers der Trennwand und gehen in einen Durchgangsraum über, in dem der Faden seitlich ohne Führung ist. Dieser seitenführungsfreie Durchgangsraum liegt zwischen einer Mündung und dem Außendurchmesser der Trennwand.

Durch diese Gestaltung des Fadenkanals ist dem Benutzer die Möglichkeit gegeben, in einer vorgegebenen Drehlage der Fadenspule einen von außen durch die Fadendurchtrittsöffnung eingesteckten Endabschnitt eines Schneidfadens durch den führungsfreien Durchgangsraum zu schieben und in den Fadeneintrittsabschnitt des Fadenkanals einzustecken. Durch weiteres Einschieben des Schneidfadens wird der Endabschnitt längs des fadenführenden Fadenkanals vorgeschoben und wird aus dem fadenführenden Fadenaustrittsabschnitt austreten, den weiteren Durchgangsraum führungsfrei durchfahren und durch die weitere Wandöffnung nach außen austreten. Der Benutzer kann nun den austretenden Endabschnitt des Schneidfadens greifen und den aufzuspulenden Schneidfaden derart positionieren, dass aus beiden Wandöffnungen eine etwa gleiche Länge des Schneidfadens vorsteht. Durch manuelles Drehen der Fadenspule entgegen der Abwickelrichtung werden nun die aus den diametral gegenüberliegenden Wandöffnungen herausstehenden Längen des Schneidfadens auf die Wickelabschnitte der Fadenspule aufgewickelt, bis ein für den Schneideinsatz notwendiger Endabschnitt aus den Wandöffnungen vorsteht.

Da der aufzuwickelnde Schneidfaden ungeteilt ist und von dem Mittelabschnitt des Schneidfadens aus durch beide Wandöffnungen aufgespult wird, ist ein gleichzeitiges, fehlerfreies Aufspulen des Schneidfadens gewährleistet, was eine störungsfreie Funktion des Fadenmähkopfes im Betrieb sicherstellt.

In Weiterbildung der Erfindung ist der Fadeneintrittsabschnitt und/oder der Fadenaustrittsabschnitt als geradliniger Kanalabschnitt ausgebildet. Die Längsmittelachse des Fadeneintrittsabschnitts und eine Längsmittelachse des Fadenaustrittsabschnitts liegen in der Ebene der Trennwand mit Abstand zueinander.

In besonderer Weiterbildung der Erfindung weisen die Mündung des Fadeneintrittsabschnitts und die Mündung des Fadenaustrittsabschnitts jeweils ein Zentrum auf, wobei eine erste Radiale von der Drehachse der Nabe durch das Zentrum der Mündung des Fadeneintrittsabschnitts verläuft und eine zweite Radiale von der Drehachse der Nabe durch das Zentrum der Mündung des Fadenaustrittsabschnitts verläuft. Die Wandöffnungen liegen auf einer gedachten Verbindungslinie durch die Drehachse der Nabe, die die Längsmittelachsen der Wandöffnungen miteinander verbindet. Ein zwischen der ersten Radialen und der Verbindungslinie liegender Eintrittswinkel am Fadeneintrittsabschnitt ist ungleich einem zwischen der zweiten Radialen und der Verbindungslinie ausgebildeten Austrittswinkel am Fadenaustrittsabschnitt ausgebildet. Vorteilhaft ist die Konstruktion derart gestaltet, dass der Eintrittswinkel kleiner als der Austrittswinkel ausgebildet ist. In besonderer Weiterbildung ist der Eintrittswinkel zu Null ausgeführt, derart, dass die erste Radiale von der Drehachse der Nabe durch das Zentrum der Mündung des Fadeneintrittsabschnitts auf der gedachten Verbindungslinie durch die Drehachse der Nabe liegt, die die Längsmittelachsen der Wandöffnungen miteinander verbindet.

In Umfangsrichtung der Nabe gesehen, ist der Durchgangsraum breiter ausgebildet als die in gleicher Richtung gemessene Breite der Mündung des Fadeneintrittsabschnitts und des Fadenaustrittsabschnitts. Der Fadeneintrittsabschnitt und der Fadenaustrittsabschnitt sind in der Ebene der Trennwand bevorzugt durch einen gebogenen Kanalabschnitt miteinander verbunden, wobei der Biegeradius des gebogenen Kanalabschnitts größer ist als der Innenradius der Nabe der Fadenspule.

In bevorzugter Weiterbildung der Erfindung ist ein zweiter Fadenkanal mit einem zweiten Fadeneintrittsabschnitt und einem zweiten Fadenaustrittsabschnitt vorgesehen. Der zweite Fadenkanal verläuft in der Trennwand der Fadenspule von der zweiten, weiteren Wandöffnung bis zur ersten Wandöffnung. In der Ebene der Trennwand liegt die Nabe der Fadenspule zwischen den Fadenkanälen.

Der Fadenaustrittsabschnitt des einen Fadenkanals und der Fadeneintrittsabschnitt des anderen Fadenkanals liegen vor einer Wandöffnung in Umfangsrichtung der Trennwand nebeneinander.

In der Ebene der Trennwand kann neben dem Fadeneintrittsabschnitt eines Fadenkanals ein Fadenhilfsaustritt des gleichen Fadenkanals vorgesehen sein, wobei eine Längsmittelachse des Fadenhilfsaustritts insbesondere parallel zu der Längsmittelachse des Fadeneintrittsabschnitts liegt. Der Fadenhilfsaustritt kann durch einen geradlinigen Kanalabschnitt des Fadenkanals gebildet sein.

In besonderer Weiterbildung gehen der Fadeneintrittsabschnitt und der Kanalabschnitt des Fadenhilfsaustritts über eine gemeinsame Kanalerweiterung in den Fadenkanal über.

In Ausgestaltung der Erfindung kann jeder Fadenkanal an ein und derselben Wandöffnung einen Fadeneintrittsabschnitt aufweisen, also an jeder Wandöffnung ein Schneidfaden in den einen oder den anderen Fadenkanal eingeschoben werden. Die gedachte Verlängerung der Längsmittelachse des Fadeneintrittsabschnitts kann dabei durch die Wandöffnung in der Umfangswand des Gehäuses verlaufen. In besonderer Weiterbildung der Erfindung können der Fadeneintrittsabschnitt des ersten Fadenkanals und der Fadeneintrittsabschnitt des zweiten Fadenkanals innerhalb des Gehäuses des Fadenmähkopfes vor einer Wandöffnung einen gemeinsamen Zentraleintritt bilden. Ein derartiger Zentraleintritt geht vorteilhaft über eine Kanalverzweigung und einen Abweiser in die Fadenkanäle über, ist also sowohl mit dem einen Fadenkanal als auch mit dem anderen Fadenkanal verbunden.

In der Wandöffnung ist bevorzugt eine Führungsbuchse mit einer Fadendurchtrittsöffnung gehalten, wobei die Führungsbuchse auf ihrer dem Rand der Trennwand zugewandten Innenseite mit einer Fangkontur ausgebildet ist. Zweckmäßig weist die Fangkontur eine Öffnungsweite auf, die zumindest einen Fadeneintrittsabschnitt und einen Fadenaustrittsabschnitt überdeckt. Die Fangkontur ist durch zwei in Hochrichtung der Nabe verlaufende Längsrippen begrenzt, die bis vor den Rand der Trennwand ragen.

Die Innenwand der Fadendurchtrittsöffnung in der Führungsbuchse ist bevorzugt als Doppelkegel ausgebildet, der sich nach innen und nach außen erweitert.

Weitere Merkmale der Erfindung ergeben sich aus den weiteren Ansprüchen, der Beschreibung und der Zeichnung, in der nachstehend im Einzelnen beschriebene Ausführungsbeispiele der Erfindung dargestellt sind. Es zeigen:
- Fig. 1: in schematischer Darstellung einen Freischneider mit einem montierten Fadenmähkopf,
- Fig. 2: eine perspektivische Ansicht eines Fadenmähkopfes zur Montage an der Antriebswelle eines Freischneiders,
- Fig. 3: eine Ansicht auf den Fadenmähkopf nach Fig. 2,
- Fig. 4: eine Explosionsdarstellung mit den wesentlichen Bauteilen des Fadenmähkopfes nach Fig. 2,
- Fig. 5: einen Schnitt durch den Fadenmähkopf längs der Linie V-V in Fig. 3,
- Fig. 6: einen Schnitt durch den Fadenmähkopf längs der Linie VI-VI in Fig. 3,
- Fig. 7: eine perspektivische Ansicht der Fadenspule des Fadenmähkopfes nach Fig. 2,
- Fig. 8: eine Draufsicht auf die Fadenspule nach Fig. 7,
- Fig. 9: eine perspektivische Ansicht eines weiteren Ausführungsbeispiels eines erfindungsgemäßen Fadenmähkopfes,
- Fig. 10: eine Seitenansicht auf den Fadenmähkopf nach Fig. 9,
- Fig. 11: eine Explosionsdarstellung des Fadenmähkopfes nach Fig. 9 mit seinen wesentlichen Bauteilen,
- Fig. 12: einen Schnitt längs der Linie XII-XII in Fig. 10,
- Fig. 13: einen Schnitt längs der Linie XIII-XIII in Fig. 10,
- Fig. 14: in vergrößerter Darstellung die im Schnitt dargestellte Fadenspule gemäß Fig. 13,
- Fig. 15: eine perspektivische Darstellung der Fadenspule des Fadenmähkopfes nach Fig. 12,
- Fig. 16: eine Draufsicht auf die Fadenspule nach Fig. 15,
- Fig. 17: in perspektivischer Darstellung eine Führungsbuchse zum Einsetzen in die Wandöffnung in der Umfangswand des Gehäuses eines Fadenmähkopfes entsprechend den Darstellungen in den Figuren 12 und 13,
- Fig. 18: eine perspektivische Ansicht auf die Führungsbuche von außen,
- Fig. 19: eine Frontansicht auf die Führungsbuchse von außen,
- Fig. 20: eine Innenansicht auf die Führungsbuchse von innen,
- Fig. 21: eine Ansicht auf die Führungsbuchse von unten,
- Fig. 22: einen Horizontalschnitt durch die Führungsbuchse.

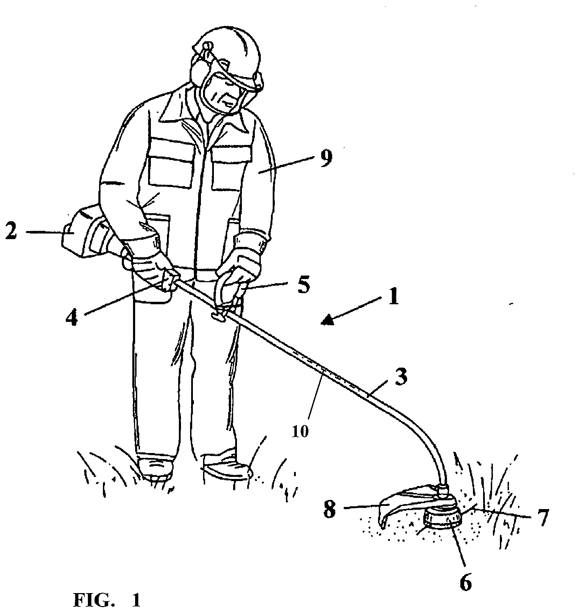

In Fig. 1 ist beispielhaft ein Freischneider 1 gezeigt, der im Wesentlichen aus einem Führungsrohr 3 besteht, an dessen einem Ende ein Antriebsmotor 2 und an dessen anderem Ende ein Fadenmähkopf 6 montiert ist. Der Freischneider weist einen ersten Handgriff 4 mit Bedienelementen für den Antriebsmotor 2 auf; zwischen dem Handgriff 4 und dem Fadenmähkopf 6 ist ein Bügelgriff 5 montiert, so dass ein Benutzer 9 den Freischneider über den Handgriff 4 und den Bügelgriff 5 tragen und führen kann. Der Fadenmähkopf 6 ist über eine Antriebswelle 10 mit dem Antriebsmotor 2 verbunden. Wird ein gebogenes Führungsrohr 3 - wie im Ausführungsbeispiel gezeigt - verwendet, ist die Antriebswelle eine flexible Antriebswelle; alternativ kann das Führungsrohr ein gerades Führungsrohr sein, so dass die Antriebswelle 10 als starre Welle ausgeführt sein kann.

Der Fadenmähkopf 6 ist an der Antriebswelle 10 montiert und wird von dieser rotierend angetrieben. Aus dem Gehäuse des Fadenmähkopfs 6 ragen die Enden eines Schneidfadens 7, der als Schneidwerkzeug dient. Zum Schutz des Benutzers 9 sowie der Umgebung ist ein Prallschutz 8 montiert.

Als Antriebsmotor 2 kann ein gemischgeschmierter Zweitaktmotor, ein gemischgeschmierter Viertaktmotor oder ein Elektromotor verwendet werden.

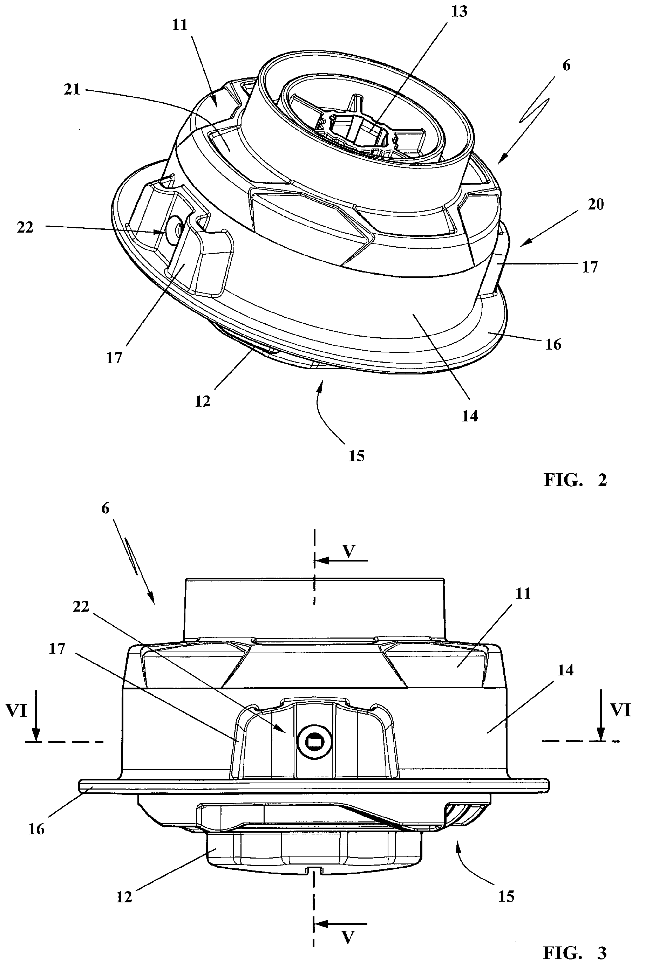

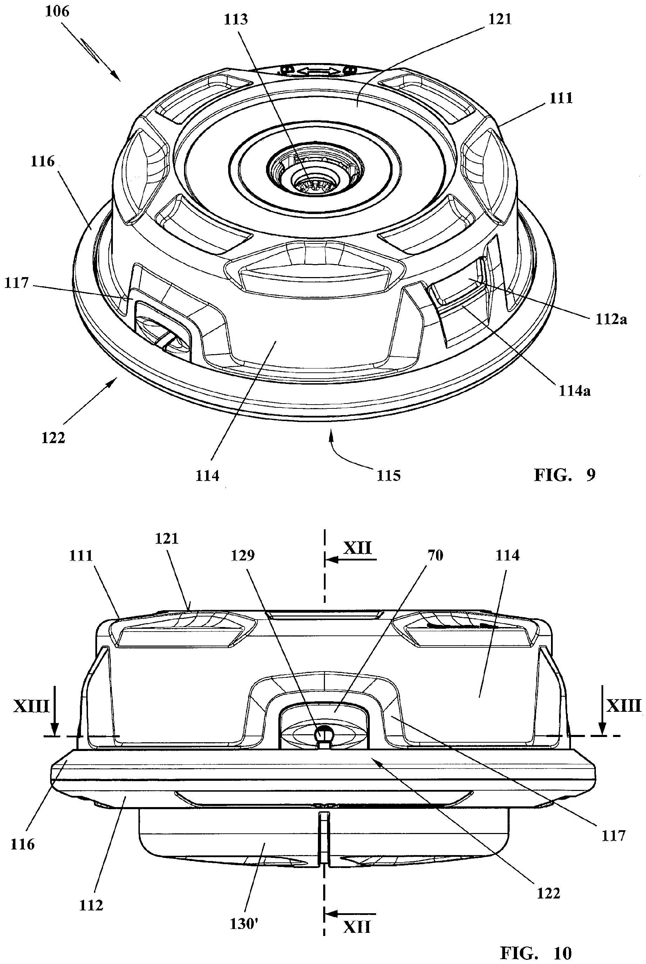

Der in Fig. 1 beispielhaft dargestellte Fadenmähkopf 6 kann verschieden ausgebildet sein. Die Figuren 2 bis 8 zeigen eine erste Ausführungsform; die Figuren 9 bis 16 zeigen eine zweite Ausführungsform.

Der in den Figuren 2 bis 8 dargestellte Fadenmähkopf 6 besteht im Wesentlichen aus einem becherförmigen Gehäuse 11, welches durch einen Verschlussdeckel 12 zu schließen ist. Das Gehäuse 11 weist eine Anschlusskontur 13 zum formschlüssigen Verbinden mit der Antriebswelle 10 auf; die Umfangswand 14 des Gehäuses 11 weist im Bereich ihrer unteren Öffnung 15 einen vorstehenden umlaufenden Außenflansch 16 auf. In der vorzugsweise zylindrisch ausgeführten Umfangswand 14 sind - einander diametral gegenüberliegend - Wandöffnungen 20 und 22 vorgesehen. Die Wandöffnungen 20, 22 dienen zum Durchtritt des Schneidfadens 7, der innerhalb des Gehäuses 11 gespeichert ist.

Zum Schutz des Schneidfadens 7 ist auf der Umfangswand 14 eine Stützstruktur 17 vorgesehen, die einen Bruch des Schneidfadens 7 im Bereich der Wandöffnung 20, 22 bei Auftreffen auf ein Hindernis verhindern soll.

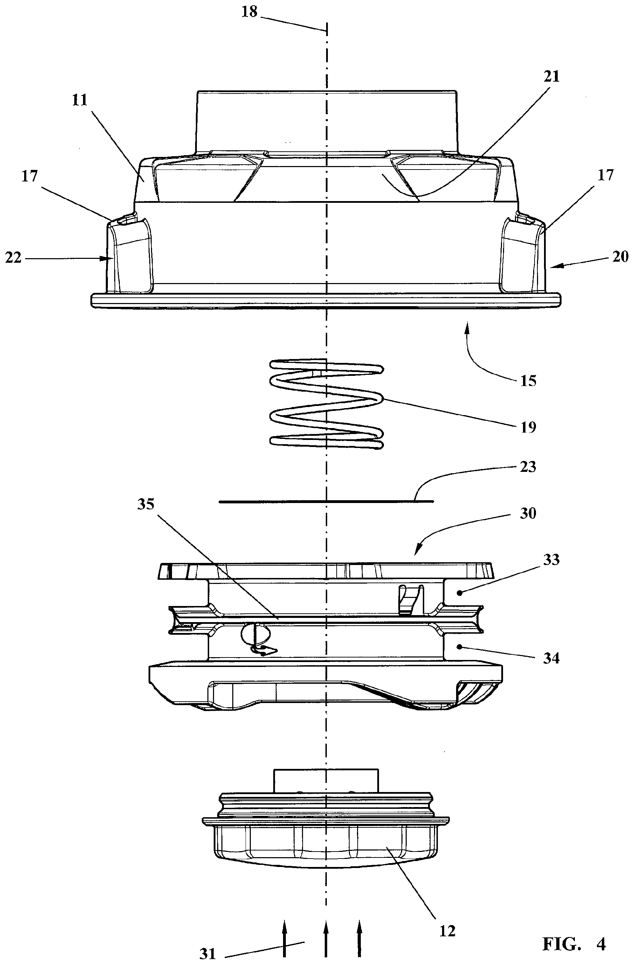

In Fig. 4 sind die wesentlichen Bauteile des Fadenmähkopfes in Explosionsdarstellung wiedergegeben. Das Gehäuse 11 ist um die Drehachse 18 von der Antriebswelle 10 drehend angetrieben. Eine im Gehäuse 11 angeordnete Fadenspule 30 wird über eine Mitnahmekontur der Mitnehmer 26 zusammen mit dem Gehäuse 11 rotierend angetrieben. Eine Schraubenfeder 19 stützt sich am Boden 21 des Gehäuses 11 ab und wirkt über eine Druckscheibe 23 auf die Fadenspule 30. Diese wird - gegen die Kraft der Schraubenfeder 19 - durch die Öffnung 15 in das Gehäuse 11 eingesetzt und mittels des Verschlussdeckels 12 im Gehäuse fixiert. Wird auf den Verschlussdeckel 12 in Pfeilrichtung 31 eine Kraft ausgeübt, so verschiebt sich die Fadenspule 30 axial innerhalb des Gehäuses gegen die Kraft der Schraubenfeder 19 um einen Weg w. Hierbei wird die Antriebsverbindung zwischen dem Gehäuse 11 und der Fadenspule 30 kurzzeitig aufgehoben, so dass das angetriebene Gehäuse 11 relativ zur Fadenspule 30 gedreht wird und einen auf der Fadenspule 30 aufgewickelten Schneidfaden abspult. Dieser tritt durch die Wandöffnungen 20 und 22 nach außen aus, so dass eine ausreichende Länge des Schneidfadens 7 (Fig. 1) als Schneidelement zur Verfügung steht. Das Prinzip der Antriebsverbindung zwischen Gehäuse 11 und Fadenspule 30 ist im Einzelnen im Patent DE 198 35 504 A1 der Anmelderin beschrieben.

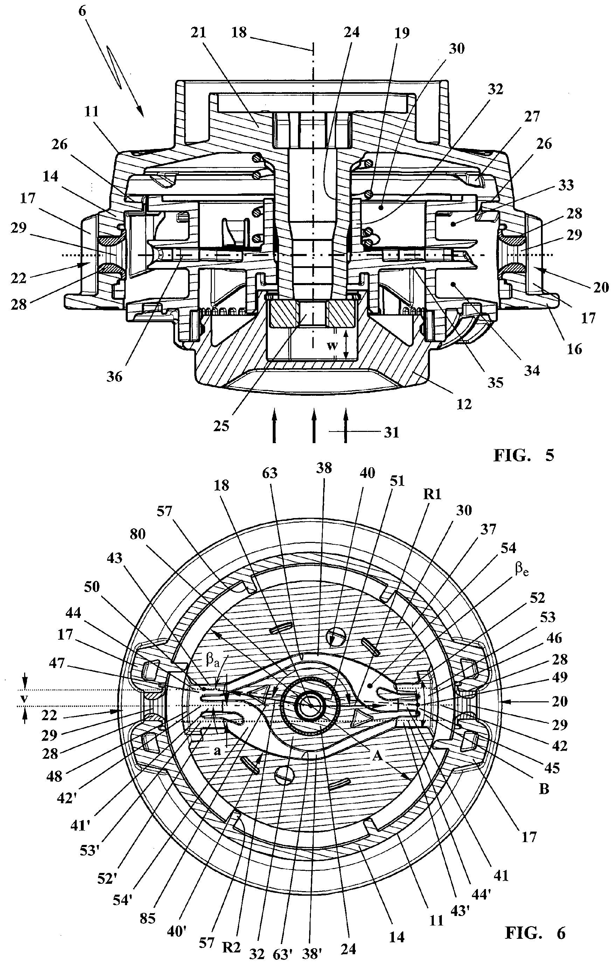

Der Aufbau des Fadenmähkopfes 6 ergibt sich insbesondere aus den Figuren 5 und 6. Das becherförmige Gehäuse 11 mit dem Boden 21 und der Umfangswand 14 mit dem abschließenden Außenflansch 16 weist eine zentrale Anschlusshülse 24 zur Aufnahme des nicht näher dargestellten Endes der Antriebswelle 10 auf. Der Verschlussdeckel 12 wird auf das Gewindeende 25 der Antriebswelle aufgeschraubt, wodurch das Gehäuse 11 fest auf der Antriebswelle 10 (Fig. 1) gehalten ist. Der Verschlussdeckel 12 ist dabei axial um den Weg w verschiebbar.

Der Verschlussdeckel 12 hält die Fadenspule 30 innerhalb des Gehäuses 11, wobei zwischen dem Boden 21 und der Fadenspule 30 die Schraubenfeder 19 wirkt. Die Schraubenfeder 19 drückt die Fadenspule 30 und den Verschlussdeckel 12 in die in Fig. 5 gezeigte Betriebsstellung, in der über Mitnehmer 26 die drehbar auf der Anschlusshülse 24 gehaltene Fadenspule 30 in Drehrichtung mit dem Gehäuse 11 über die Mitnehmer 26 um die Drehachse 18 rotierend mitgenommen wird.

Wird durch Krafteinwirkung in Pfeilrichtung 31 der Verschlussdeckel 12 zusammen mit der Fadenspule 30 gegen die Kraft der Schraubenfeder 19 nach innen verschoben, wird die Drehverbindung mit den Mitnehmern 26 aufgehoben, wodurch das rotierend angetriebene Gehäuse 11 relativ zur Fadenspule 30 drehen kann. Die Drehbewegung wird durch Nocken einer Weiterschalteinrichtung 27 kontrolliert. Nach Wegfall der in Pfeilrichtung 31 wirkenden Kraft drückt die Schraubenfeder 19 die Fadenspule 30 erneut nach unten, wobei die Mitnehmer 26 wieder in Eingriff mit der Fadenspule 30 gelangen, so dass die antreibende Drehverbindung zwischen dem Gehäuse 11 und der Fadenspule 30 wieder hergestellt ist.

Die auf der Anschlusshülse 24 drehend gehaltene Fadenspule 30 ist relativ zum Gehäuse 11 drehbar, wozu die Fadenspule 30 mit einer Nabe 32 auf der Anschlusshülse 24 gelagert ist.

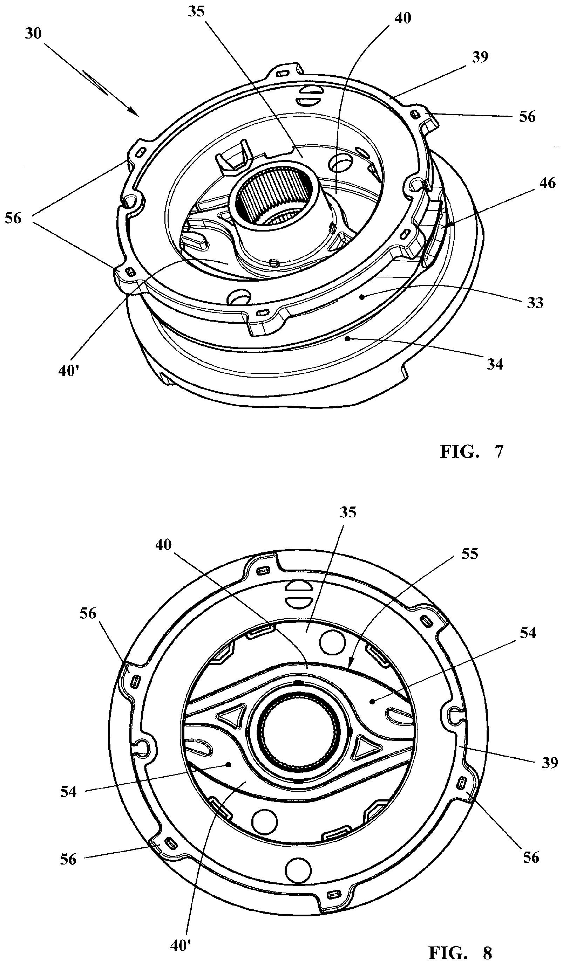

Die in den Figuren 7 und 8 dargestellte Fadenspule 30 besteht im Wesentlichen aus der Nabe 32, auf der Wickelabschnitte 33 und 34 ausgebildet sind. Wie die Fig. 5 in Verbindung mit den Figuren 7 bis 8 zeigt, weist die Nabe 32 eine insbesondere mittige Trennwand 35 auf, die die Fadenspule 30 in einen ersten Wickelabschnitt 33 und einen zweiten Wickelabschnitt 34 aufteilt. Der erste Wickelabschnitt 33 ist ein oberer Wickelabschnitt und liegt dem Boden 21 zugewandt; der zweite Wickelabschnitt 34 ist ein unterer Wickelabschnitt und liegt dem Verschlussdeckel 12 zugewandt.

Die Trennwand 35 erstreckt sich in einer Ebene 36, auf deren Höhe in der Umfangswand 14 die Wandöffnungen 20 und 22 ausgebildet sind, welche - bezogen auf die Drehachse 18 - sich einander vorzugsweise diametral gegenüberliegen. Im gezeigten Ausführungsbeispiel ist in der Wandöffnung 20 bzw. 22 eine Führungsbuchse 28 eingesetzt, die eine verschleißfreie Führung des Schneidfadens sicherstellt. Die Führungsbuchsen 28 weisen eine zentrale Fadendurchtrittsöffnung 29 auf.

Wie die Schnittdarstellung in Fig. 6 zeigt, ist in der Trennwand 35 ein Fadenkanal 40 ausgebildet, der von der einen, ersten Wandöffnung 20 zu der weiteren, zweiten Wandöffnung 22 verläuft. Der Fadenkanal 40 ist vorzugsweise ausschließlich in der Trennwand 35 ausgebildet und weist einen fadenführenden Fadeneintrittsabschnitt 41 auf, dessen Längsmittelachse 42 auf einer Radialen R1 liegt, die durch die Drehachse 18 der Nabe 32 verläuft. In einer - in Fig. 6 dargestellten - vorgegebenen Drehlage der Fadenspule 30 verläuft die gedachte Verlängerung der Längsmittelachse 42 des Fadeneintrittsabschnitts 41 durch die Wandöffnung 20 bzw. durch die Fadendurchtrittsöffnung 29 der Führungsbuchse 28. Zweckmäßig liegen die Mittelachse der Fadendurchtrittsöffnung 29 und die Längsmittelachse 42 zueinander gleichachsig.

Wie in Fig. 6 ferner gezeigt ist, führt der fadenführende Fadenkanal 40 ausgehend von dem fadenführenden Fadeneintrittsabschnitt 41 an der Nabe 32 vorbei bis zu einem gegenüberliegenden fadenführenden Fadenaustrittsabschnitt 43 im Rand der Trennwand 35. Diesem fadenführenden Fadenaustrittsabschnitt 43 ist die zweite, weitere Wandöffnung 22 in der Umgangswand 14 des Gehäuses 11 zugeordnet. Dieser fadenführende Fadenaustrittsabschnitt 43 weist eine Längsmittelachse 44 auf. Die Längsmittelachse 44 des Fadenaustrittsabschnitts 43 verläuft etwa parallel zu der ersten Radialen R1 bzw. zur Längsmittelachse 42 des Fadeneintrittsabschnitts 41. Die Längsmittelachse 44 des Fadenaustrittsabschnitts 43 hat zu der Längsmittelachse 42 des Fadeneintrittsabschnitts 41 - in Umfangsrichtung der Nabe 32 gesehen - einen seitlichen Versatz v; in der Ebene 36 der Trennwand 35 liegt die Längsmittelachse 44 des Fadenaustrittsabschnitts 43 mit einem Abstand a zur Längsmittelachse 42 des Fadeneintrittsabschnitts 41.

Die Mündung 45 des Fadeneintrittsabschnitts 41 und die Mündung 47 des Fadenaustrittsabschnitts 43 liegen innerhalb eines Außendurchmessers A der Trennwand 35. Der Außendurchmesser A der Trennwand 35 ist durch den äußeren Rand 37 der Trennwand bestimmt.

Die Mündung 45 des Fadeneintrittsabschnitts 41 mündet in einem Durchgangsraum 46, in dem der Faden seitlich keine weitere Führung erfährt; entsprechend mündet die Mündung 47 des Fadenaustrittsabschnitts 43 in einem seitenführungsfreien Durchgangsraum 48. Der seitenführungsfreie Durchgangsraum 46 bzw. 48 liegt innerhalb des Außendurchmessers A der Trennwand 35. Der seitenführungsfreie Durchgangsraum 46 und 48 liegt darüber hinaus zwischen der jeweiligen Mündung 45 und 47 und der Wandöffnung 20 bzw. 22.

Der Fadeneintrittsabschnitt 41 und der Fadenaustrittsabschnitt 43 sind insbesondere als geradlinige Kanalabschnitte ausgebildet, wobei die Längsmittelachse 42 des Fadeneintrittsabschnitts 41 und die Längsmittelachse 44 des Fadenaustrittsabschnitts 43 in Draufsicht nach Fig. 6 mit dem - bezogen auf die Umfangsrichtung der Nabe 32 - seitlichen Versatz v zueinander liegen. In der gezeigten Ausführungsform haben die Längsmittelachse 42 und die Längsmittelachse 44 - in der Ebene 36 der Trennwand 35 gemessen - einen Abstand a zueinander.

Die Mündung 45 des Fadeneintrittsabschnitts 41 hat ein Zentrum 49; entsprechend weist die Mündung 47 des Fadenaustrittsabschnitts ein Zentrum 50 auf. Wie in Draufsicht nach Fig. 6 dargestellt, verläuft die Verbindungslinie 51 der Zentren 49 und 50 seitlich an der Drehachse, 18 vorbei; die Verbindungslinie 51 der Zentren 49 und 50 schneidet somit die Drehachse 18 des Fadenmähkopfes nicht.

Das Zentrum 49 liegt auf einer Radialen R1; das Zentrum 50 liegt auf einer Radialen R2. Der zwischen den Radialen R1, R2 aufgespannte Winkel 80 ist ungleich 180°; vorzugsweise ist der Winkel 80 kleiner 180°. Im gezeigten Ausführungsbeispiel liegt der Winkel 80 zwischen 165° und 178°.

In Fig. 6 ist ferner die erste Radiale R1 gezeigt, die von der Drehachse 18 der Nabe 32 durch das Zentrum 49 der Mündung 45 des Fadeneintrittsabschnitts 41 verläuft. Diese Radiale R1 liegt vorzugsweise auf einer Verbindungslinie 85 der einander gegenüberliegenden Wandöffnungen 20 und 22. Die Verbindungslinie 85 verläuft durch die Drehachse 18 der Nabe 32 und verbindet insbesondere die Längsmittelachsen der Wandöffnungen 20, 22 bzw. die Längsmittelachsen der Fadendurchtrittsöffnungen 29 miteinander.

Die zweite Radiale R2, die von der Drehachse 18 der Nabe 32 durch das Zentrum 50 der Mündung 47 des Fadenaustrittsabschnitts 43 verläuft, bildet mit der Verbindungslinie 85 einen Austrittswinkel βₐ. Entsprechend kann zwischen der ersten Radialen R1 und der Verbindungslinie 85 ein Eintrittswinkel βₑ ausgebildet sein; in Fig. 6 ist der Eintrittswinkel βₑ zu Null ausgebildet.

Um bei leichtem Einstecken des aufzuwickelnden Schneidfadens eine gute Fadenführung zu erzielen, ist vorgesehen, den Eintrittswinkel βₑ ungleich dem Austrittswinkel βₐ auszubilden, insbesondere den Eintrittswinkel βₑ zu Null auszubilden. Der Austrittswinkel ist bevorzugt im Bereich von 2° bis 12° gewählt, insbesondere in einem Winkelbereich von 5° bis 10°

In der Ebene 36 der Trennwand 35 hat der Durchgangsraum 46, 48 in Umfangsrichtung der Nabe 32 eine Breite B, die breiter ausgebildet ist als die in gleicher Umfangsrichtung gemessene Breite der Mündung 45 bzw. 47. In Umfangsrichtung gemessen, ist die Breite B des Durchgangsraums 46, 48 mehrfach breiter als die Mündung 45, 47, im Ausführungsbeispiel zwei bis drei Mal breiter als die Mündung 45 bzw. 47.

Wie die Figuren 6 und 8 zeigen, sind der Fadeneintrittsabschnitt 41 und der Fadenaustrittsabschnitt 43 des Fadenkanals 40 durch einen in der Ebene 36 der Trennwand 35 gebogenen Kanalabschnitt 38 miteinander verbunden. Der Biegeradius des gebogenen Kanalabschnittes 38 ist dabei größer als der Innenradius der Nabe 32. In vorteilhafter Weiterbildung der Erfindung ist ein zweiter Fadenkanal 40' mit einem zweiten Fadeneintrittsabschnitt 41' und einem zweiten Fadenaustrittsabschnitt 43' vorgesehen. Der zweite Fadenkanal 40' erstreckt sich in der Trennwand 35 der Fadenspule 30 von der zweiten, weiteren Wandöffnung 22 bis zur ersten Wandöffnung 20. In der Ebene 36 der Trennwand 35 liegt die Nabe 32 der Trennwand 35 zwischen den Fadenkanälen 40 und 40'. Der Fadenkanal 40' ist gleich ausgebildet wie der Fadenkanal 40. Die zum Fadenkanal 40 vorstehend gemachten Ausführungen gelten entsprechend für den Fadenkanal 40'. Gleiche Teile sind mit einem gleichen Bezugszeichen ergänzt mit einem Strich gekennzeichnet.

Der Fadenaustrittsabschnitt 43 des ersten Fadenkanals 40 und der Fadeneintrittsabschnitt 41' des zweiten Fadenkanals 40' liegen vor der Wandöffnung 22 in Umfangsrichtung der Trennwand 35 nebeneinander. Entsprechend liegen der Fadeneintrittsabschnitt 41 des ersten Fadenkanals 40 und der Fadenaustrittsabschnitt 43' des zweiten Fadenkanals 40' vor der Wandöffnung 20 in Umfangsrichtung der Trennwand 35 gesehen nebeneinander.

Es kann zweckmäßig sein, in der Ebene 36 der Trennwand 35 neben dem Fadeneintrittsabschnitt 41 bzw. 41' einen Fadenhilfsaustritt 52 des ersten Fadenkanals 40 bzw. einen Fadenhilfsaustritt 52' des zweiten Fadenkanals 40' vorzusehen. Eine Längsmittelachse 53 bzw. 53' des Fadenhilfsaustritts 52 bzw. 52' liegt parallel zur Längsmittelachse 42 bzw. 42' des Fadeneintrittsabschnitts 41 bzw. 41'. Entsprechend den geradlinig ausgebildeten Fadeneintrittsabschnitten 41, 41' bzw. Fadenaustrittsabschnitten 43, 43' ist auch der Fadenhilfsaustritt 52, 52' durch einen geradlinigen Kanalabschnitt des Fadenkanals 40 bzw. 40' ausgebildet.

Wie Fig. 6 zeigt, gehen der Fadeneintrittsabschnitt 41 und der Fadenhilfsaustritt 52 über eine gemeinsame Kanalerweiterung 54 in den gebogenen Kanalabschnitt 38 des Fadenkanals 40 über. Entsprechend weist der Fadenkanal 40' eine Kanalerweiterung 54' auf.

Die Darstellungen der Fadenspule nach den Figuren 7 und 8 zeigen am oberen Rand 39 des oberen Wickelabschnitts 33 über den Umfang gleichmäßig verteilte Mitnahmenocken 56, die mit den Mitnehmern 26 des Gehäuses 11 zusammenwirken und die Antriebsverbindung des Gehäuses 11 auf die Fadenspule 30 in der Betriebslage gemäß Fig. 5 gewährleisten.

Im gezeigten Ausführungsbeispiel sind die Fadenkanäle 40 und 40' als in einer Flachseite der Trennwand 35 ausgebildete Nuten 55 vorgesehen; die in Fig. 4 dargestellte Druckscheibe 23 liegt auf der Flachseite der Trennwand 35 auf und verschließt die Nuten 55, wodurch die Fadenkanäle 40, 40' einerseits durch die Trennwand 35 und andererseits durch die Druckscheibe 23 begrenzt sind.

In vorteilhafter Weiterbildung des erfindungsgemäßen Fadenmähkopfes 30 sind auf der Innenseite der Umfangswand 14 Längsrippen 57 vorgesehen, die sich in Richtung der Drehachse 18 und zumindest über einen Teil der Höhe des Fadenaufnahmeraums erstrecken, zweckmäßig über die Höhe der Wickelabschnitte 33 und 34. Die Längsrippen 57 reichen radial bis an den Rand 37 der Trennwand 35 heran, ohne diese zu berühren. Durch die Längsrippen 57 wird gewährleistet, dass sich der aufgewickelte Schneidfaden nicht aus einem Wickelabschnitt 33 bzw. 34 verlagern kann.

Der Fadenmähkopf 6 kann - ohne dass er geöffnet werden muss - mit einem neuen Schneidfaden bestückt werden. Hierzu wird die Fadenspule 30 manuell in die in Fig. 6 dargestellte vorgegebene Drehlage gedreht und der Rest eines verbrauchten Schneidfadens radial aus den Wandöffnungen 20, 22 herausgezogen; ein neuer Schneidfaden wird von außen durch die Wandöffnungen 20 oder 22 eingeschoben.

Ist die Fadenspule 30 in die in Fig. 6 gezeigte vorgegebene Drehlage gedreht, wird der Schneidfaden entweder durch die Wandöffnung 20 oder durch die Wandöffnung 22 geradlinig eingeschoben. In dieser vorgegebenen Drehlage der Fadenspule 30 wird ein durch die Wandöffnung 20 eingesteckter Schneidfaden den Durchgangsraum 46 führungsfrei durchfahren und über die Mündung 45 in den Fadeneintrittsabschnitt 41 des Fadenkanals eintreten. Der Schneidfaden wird axial weiter eingeschoben, wobei das Ende des Schneidfadens über den gebogenen Kanalabschnitt 38 zum Fadenaustrittsabschnitt 43 vorgeschoben wird. Das Ende des Schneidfadens wird an der Außenwand 63 des Fadenkanals 40 geführt und tritt dabei über die Mündung 47 in den freien Durchgangsraum 48 aus. Da das freie Ende des eingesteckten Schneidfadens in dem führungsfreien Durchgangsraum 48 keine weitere Führung erfährt, wird sich das Ende beim Auftreffen auf den Randbereich der Wandöffnung 22, im Ausführungsbeispiel auf die Führungsbuchse 28 im Wandbereich auf die Fadendurchtrittsöffnung 29 ausrichten und aus der Wandöffnung 22 nach außen austreten. Der Benutzer kann nun das Fadenende ergreifen und den aufzuwickelnden Schneidfaden derart positionieren, dass aus beiden Wandöffnungen 20 und 22 eine etwa gleiche Länge des Schneidfadens herausragt. Nunmehr kann - gegen die Abwickelrichtung - die Fadenspule 30 gedreht werden, wobei im Bereich des Fadeneintrittsabschnitts 41 der Schneidfaden z. B. in den oberen Wickelabschnitt 34 und im Bereich des Fadenaustrittsabschnitts 43 der Schneidfaden z. B. in den unteren Wickelabschnitt 33 aufgewickelt wird. Die Fadenspule 30 wird so lange gedreht, bis ein zum Schneiden ausreichender Endabschnitt aus den Wandöffnungen 20 bzw. 22 vorsteht.

Nutzt sich der Schneidfaden ab, wird durch Drücken des Verschlussdeckels 12 die Antriebsverbindung zwischen dem Gehäuse 11 und der Fadenspule 30 gelöst, so dass das angetriebene Gehäuse 11 schneller als die Fadenspule 30 drehen kann, wodurch der Schneidfaden abgewickelt wird. Durch die nicht näher beschriebene Weiterschalteinrichtung 27 wird gewährleistet, dass eine vorbestimmte Länge des Schneidfadens abgespult wird, bis die Mitnehmer 26 des Gehäuses 11 mit den Mitnahmenocken 56 der Fadenspule 30 wieder in Eingriff treten und die Fadenspule 30 zusammen mit dem Gehäuse 11 durch die Antriebswelle 10 angetrieben wird.

Im Ausführungsbeispiel der Figuren 9 bis 16 ist ein Fadenmähkopf 106 gezeigt, der im Grundaufbau im Wesentlichen dem Fadenmähkopf 6 der Figuren 2 bis 8 entspricht; gleiche Teile werden mit um 100 erhöhten Bezugszeichen bezeichnet.

Das becherförmige Gehäuse 111 weist einen Boden 121 und einen Außenflansch 116 auf. Im Bereich der Wandöffnungen 120, 122 - in Fig. 9 ist die Wandöffnung 122 gezeigt - ist eine Stützkontur 117 zum Schutz des Schneidfadens vorgesehen. Die Öffnung 115 des becherförmigen Gehäuses 111 wird durch Einsetzen einer Fadenspule 130 mit einer Schaltkappe 130' verschlossen, wobei die Schaltkappe 130' von einem Verschlussdeckel 112 gehalten ist, der über Rastelemente 112a am Gehäuse 111 festgelegt wird. In gleicher Weise wie im Ausführungsbeispiel nach den Figuren 2 bis 8 wird die Fadenspule 130 über eine Schraubenfeder 119 und eine Druckscheibe 123 nach unten gegen den Verschlussdeckel 112 gedrückt.

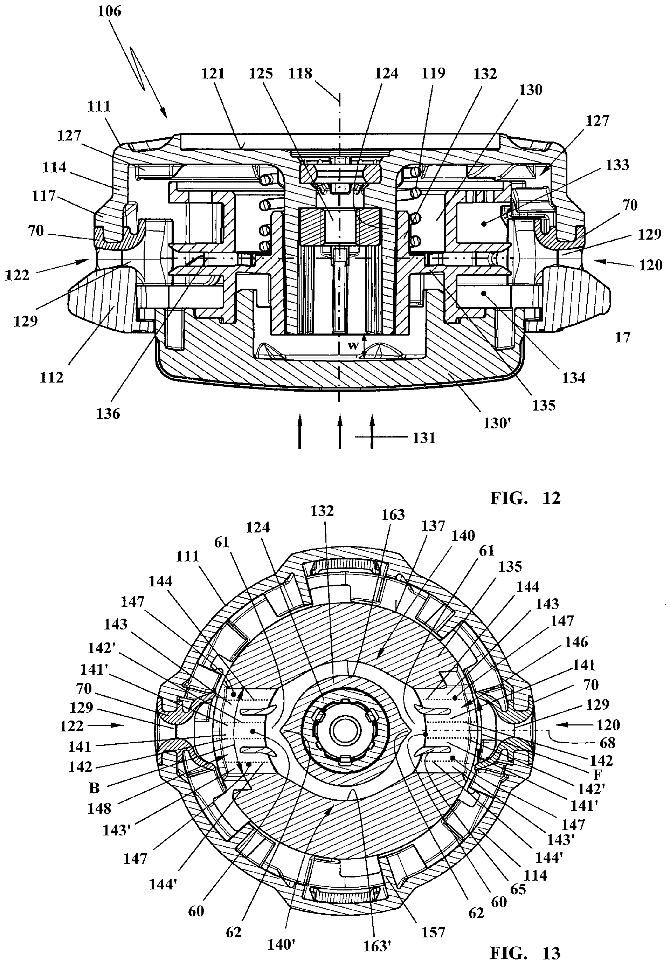

Wie aus der Schnittdarstellung nach Fig. 12 ersichtlich, ist im Zentrum des Bodens 121 eine Anschlusshülse 124 angeformt, in welcher eine Befestigungsmutter 125 zum Aufschrauben auf das Gewindeende einer Antriebswelle 10 (Fig. 1) vorgesehen ist. Die Anschlusshülse 124 greift in die Nabe 132 der Fadenspule 130 ein, die einen oberen Wickelabschnitt 133 und einen unteren Wickelabschnitt 134 aufweist. Die Wickelabschnitte 133 und 134 sind durch eine Trennwand 135 voneinander getrennt, wobei die Trennwand 135 zugleich die Wickelabschnitte 133 und 134 drehfest mit der Nabe 132 verbindet.

Wie im ersten Ausführungsbeispiel nach den Figuren 2 bis 8 ist die Fadenspule 130 gegen die Kraft der Schraubenfeder 119 axial um einen Weg w verschiebbar, wodurch die Antriebsverbindung zwischen dem angetriebenen Gehäuse 111 und der Fadenspule 130 aufgehoben wird. Dadurch dreht das Gehäuse 111 schneller als die Fadenspule 130, so dass ein aus den Wandöffnungen 120 und 122 herausragender Schneidfaden weiter abgewickelt wird. Zur Steuerung des Abwickelns ist zwischen dem Boden 121 und der Fadenspule 130 eine Weiterschalteinrichtung 127 ausgebildet, die jeweils Drehungen mit einem vorgegebenen Drehwinkel der Relativbewegung zwischen dem Gehäuse 111 und der Fadenspule 130 zulässt, bevor die Schraubenfeder 119 die Fadenspule 130 wieder in die Betriebslage gemäß der Darstellung in Fig. 12 drückt, in der die Fadenspule 130 in Antriebsverbindung mit dem Gehäuse 111 steht.

Die Fadenkanäle 140 und 140', zwischen denen die Nabe 132 der Fadenspule 130 liegt, gehen aus der Schnittdarstellung nach Fig. 13 hervor.

In Abweichung vom Ausführungsbeispiel der Figuren 2 bis 8 hat jeder Fadenkanal 140, 140' an ein und derselben Wandöffnung 120, 122 einen Fadeneintrittsabschnitt 141 bzw. 141', wobei die Längsmittelachse 142 bzw. 142' zentral durch die Wandöffnung 120 bzw. 122 in der Umfangswand 114 des Gehäuses 111 verläuft. Dabei bilden der Fadeneintrittsabschnitt 141 des ersten Fadenkanals 140 und der Fadeneintrittsabschnitt 141' des zweiten Fadenkanals 140' an einer Wandöffnung 120 bzw. 122 einen gemeinsamen Zentraleintritt 60. Der Zentraleintritt 60 geht über eine Kanalverzweigung 61 sowohl in den einen Fadenkanal 140 auf der einen Seite der Nabe 132 als auch in den zweiten Fadenkanal 140' auf der anderen Seite der Nabe 132 über. Zweckmäßig ist dabei ein Abweiser 62 vorgesehen, dessen Spitze insbesondere auf der Längsmittelachse 68 des Zentraleintritts 60 liegt und einen durch die Wandöffnung 120 bzw. 122 eingeschobenen Schneidfaden entweder in den Fadenkanal 140 oder in den Fadenkanal 140' führt.

Jeder Fadenkanal 140 bzw. 140' endet an einer Wandöffnung 120 bzw. 122 mit einem Fadenaustrittsabschnitt 143, 143' wobei - in Umfangsrichtung in der Ebene 136 der Trennwand 135 gesehen - auf beiden Seiten des Zentraleintritts 60 je ein Fadenaustrittsabschnitt 143, 143' vorgesehen ist. Der Zentraleintritt 60 wie die Fadenaustrittsabschnitte 143, 143' münden jeweils in einen seitenführungsfreien Durchgangsraum 146 bzw. 148.

In der in Fig. 13 vorgegebenen Drehlage der Fadenspule 130 wird ein von außen durch die erste Wandöffnung 120 eingesteckter Endabschnitt eines Schneidfadens den Durchgangsraum 146 führungsfrei durchfahren, wobei das Ende des Schneidfadens in den gemeinsamen Zentraleintritt 60 der beiden Führungskanale 140 und 140' eintritt. Bei Auftreffen auf den Abweiser 62 wird der Führungsabschnitt des Schneidfadens entweder in den Fadenkanal 140 oder in den Fadenkanal 140' geleitet. Wird der eingesteckte Endabschnitt des Schneidfadens in den Fadenkanal 140 geführt, wird er sich längs der Außenwand 163 des Fadenkanals 140 vorschieben und in den Fadenaustrittsabschnitt 143 eintreten. Mit dem weiteren Vorschieben des Schneidfadens wird das freie Ende aus dem Fadenaustrittsabschnitt 143 in den führungsfreien Durchgangsraum 148 austreten und in Richtung auf die Wandöffnung 122 weitergeführt und durch diese austreten.

Im gezeigten Ausführungsbeispiel nach Fig. 13 ist die Breite B des führungsfreien Durchgangsraums 148 breiter, insbesondere mehrfach breiter als die Mündung des Zentraleintritts 60; die Breite B entspricht vorzugsweise der in Umfangsrichtung in der Ebene 136 der Trennwand 135 gemessenen Breite der nebeneinander liegenden Mündungen 147 der Fadenaustrittsabschnitte 143, 143' sowie der Mündung des Zentraleintritts 60.

Tritt der Anfang des eingeführten Schneidfadens aus der gegenüberliegenden Wandöffnung 122 aus, kann der Benutzer den Schneidfaden greifen und ihn so positionieren, dass aus beiden Wandöffnungen 120, 122 eine etwa gleiche Länge des aufzuwickelnden Schneidfadens vorsteht. Dann wird - über die Betätigungskappe 130' - die Fadenspule 130 entgegen der Abwickelrichtung gedreht, bis der Schneidfaden auf den Wickelabschnitten 133 und 134 aufgewickelt ist und nur noch ein zum Schneiden notwendiger Endabschnitt aus den Wandöffnungen 120 und 122 vorsteht.

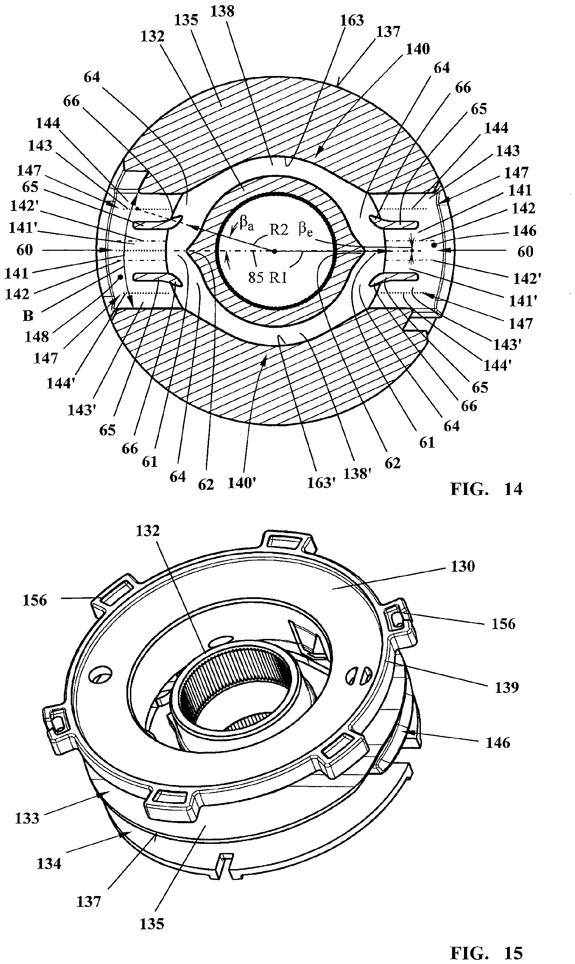

Wie die Schnittdarstellung der Fadenspule in Fig. 14 zeigt, ist der Zentraleintritt 60 von den Fadenaustrittsabschnitten 143, 143' durch eine Trennwand 65 getrennt. Das dem Fadenkanal 140 bzw. 140' zugewandte innere Ende 66 der Trennwand 65 ist etwa tangential zum gebogenen Kanalabschnitt 138 ausgerichtet, so dass ein an der Außenwand 163 des Fadenkanals 140, 140' geführter Schneidfaden sicher gefangen und durch den Fadenaustrittsabschnitt 143, 143' nach außen geführt wird. Daneben ist das innere Ende 66 derart gestaltet, dass zwischen dem Abweiser 62 und der inneren Trennwand 65 ein führender Abschnitt 64 gebildet ist, der die Wirkung des Abweisers 62 unterstützt. Entsprechend der Darstellung in Fig. 7 weist auch die Fadenspule 130 am oberen Rand 139 Mitnahmenocken 156 auf, über die eine Antriebsverbindung zwischen dem angetriebenen Gehäuse 111 und der Fadenspule 130 hergestellt wird.

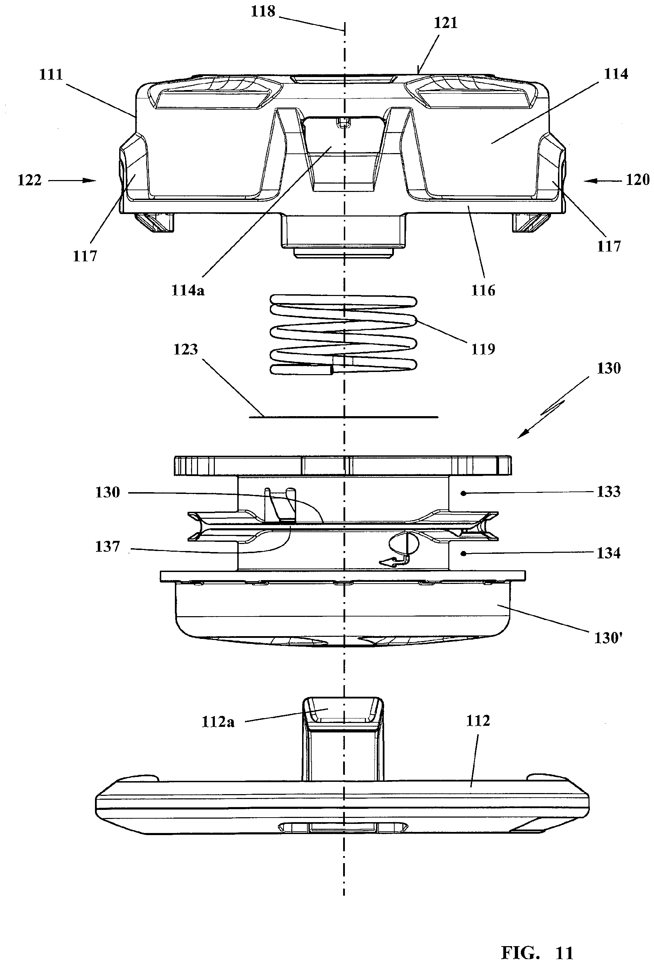

Die Fadenkanäle 140 und 140' sind entsprechend der Beschreibung zum Ausführungsbeispiel nach den Figuren 7 und 8 in einer Flachseite der Trennwand 135 als Nuten ausgebildet. Zum axialen Verschließen der Fadenkanäle 140, 140' dient die in Fig. 11 gezeigte Druckscheibe 123.

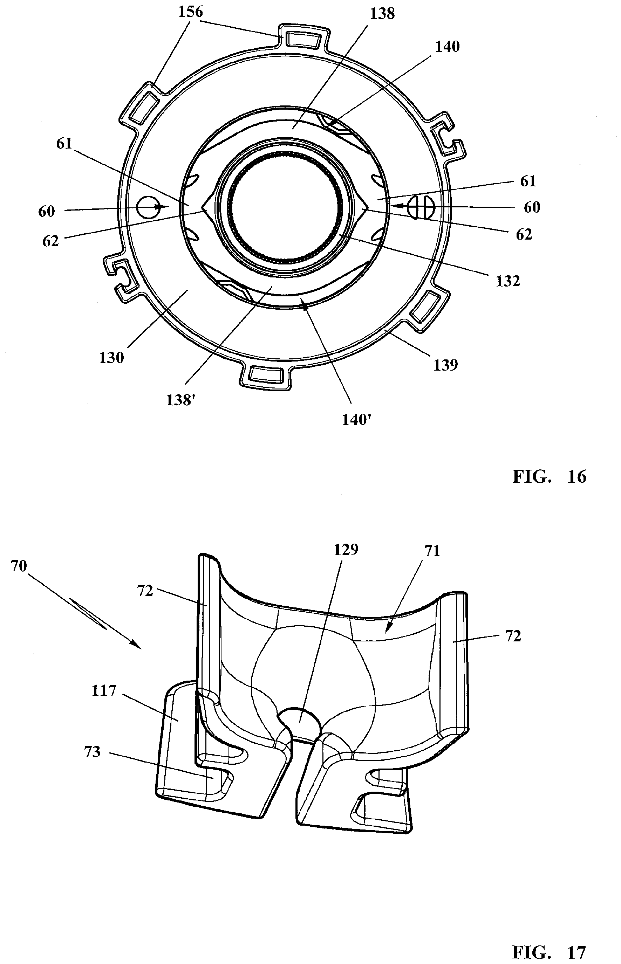

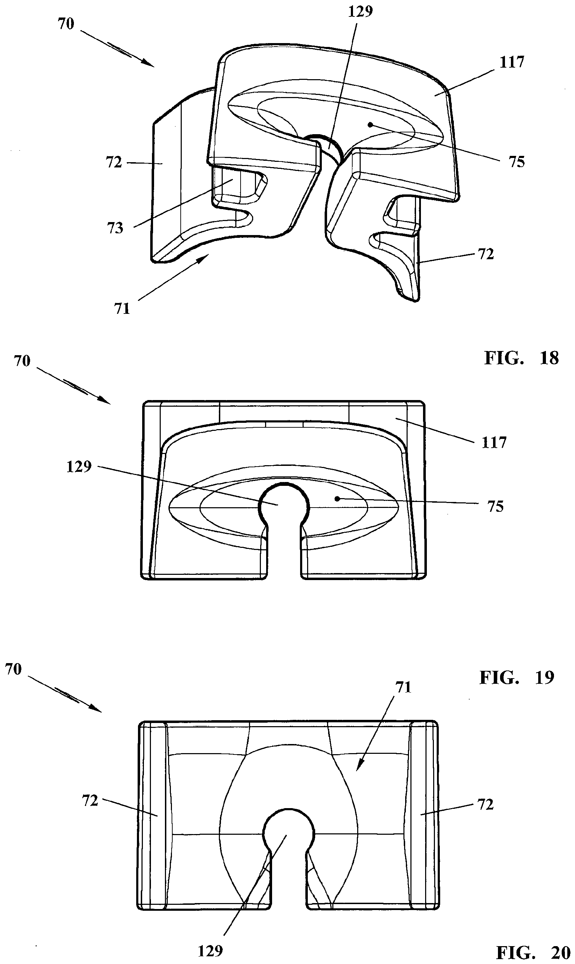

Im Ausführungsbeispiel nach den Figuren 9 bis 16 sind in den Wandöffnungen 120 und 122 Führungsbuchsen 70 vorgesehen, wie sie in den Figuren 17 bis 22 wiedergegeben sind. Die Führungsbuchsen 70 sind auf ihrer radial innen liegenden Innenseite mit einer Fangkontur 71 ausgebildet, wobei die Fadendurchtrittsöffnung 129 etwa im Zentrum der Führungsbuchse 70 vorgesehen ist.

Die Fangkontur 71 ist durch zwei sich in Hochrichtung der Drehachse 118 erstreckende Längsrippen 72 begrenzt, die sich bis an den Rand 137 der Trennwand 135 erstrecken, ohne diese zu berühren. Die Längsrippen 72 haben die gleiche Funktion wie die im Gehäuse 111 ausgebildeten inneren Längsrippen 157, die ein Herausrutschen des Schneidfadens von den Wickelabschnitten 133, 134 verhindern.

Der in Umfangsrichtung gemessene Abstand F der die Fangkontur 71 begrenzenden Längsrippen 72 entspricht etwa der in gleicher Richtung gemessenen Breite B (Fig. 13) des führungsfreien Durchgangsraums 146 bzw. 148. Dadurch wird sichergestellt, dass ein aus einem Fadenaustrittsabschnitt 143, 143' austretender Schneidfaden durch die Fangkontur 71 zielgerichtet in die Fadendurchtrittsöffnung 129 geführt wird und somit aus der Wandöffnung 120 bzw. 122 austritt.

Die Führungsbuchse 70 ist derart gestaltet, dass der Rand einer Wandöffnung 120, 122 in einer Aufnahmekontur 73 der Führungsbuchse 70 aufgenommen wird; die bevorzugt aus Metall bestehende Führungsbuchse 70 ist formschlüssig in der Umfangswand 114 des Gehäuses 111 gehalten. Die Austrittskontur 75 ist ähnlich einem ellipsoiden Körper gestaltet, wobei die Stützstruktur 117 zum Schutz des Schneidfadens gegen Abbrechen an der Führungsbuchse 70 selbst ausgebildet ist.

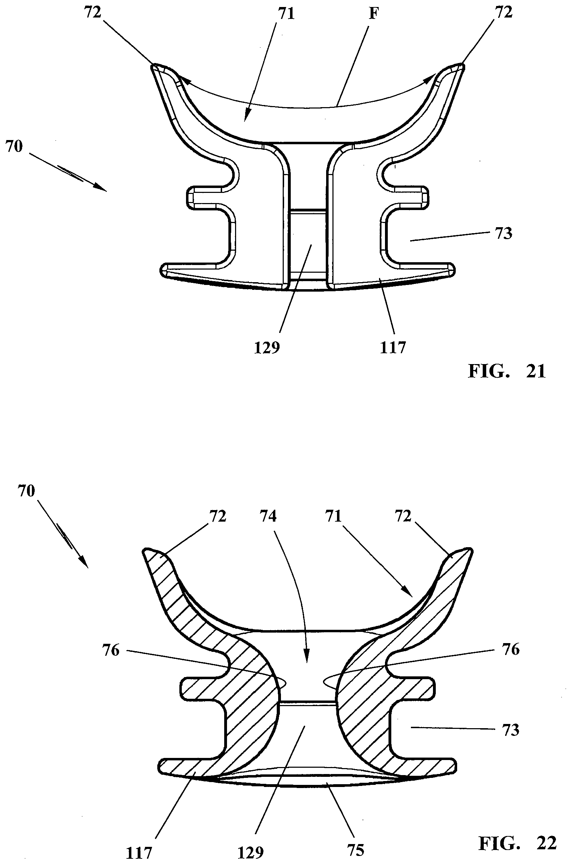

Wie insbesondere die Schnittdarstellung in Fig. 22 zeigt, ist die Fadendurchtrittsöffnung 129 als gerundete Öffnung 74 ausgebildet, so dass der Schneidfaden sich an die gerundete Kontur 76 anlegen kann, wodurch ein Bruch des Schneidfadens im Bereich der Fadendurchtrittsöffnung 129 vermieden ist.

## Patentansprüche

1. Fadenmähkopf zur Montage an der Antriebswelle (10) eines Freischneiders (1), bestehend aus einem becherförmigen Gehäuse (11, 111) mit einer Umfangswand (14, 114), wobei in der Umfangswand (14, 114) eine erste Wandöffnung (20, 120) für einen Schneidfaden (7) ausgebildet ist, mit einer im Gehäuse (11, 111) angeordneten Fadenspule (30, 130) für den Schneidfaden (7), wobei die Fadenspule (30, 130) relativ zum Gehäuse (11, 111) drehbar ist und eine Nabe (32, 132) mit einer Drehachse (18, 118) aufweist, und auf der Nabe (32, 132) eine scheibenförmige Trennwand (35, 135) angeordnet ist, die einen maximalen Außendurchmesser (A) aufweist, wobei die Trennwand (35, 135) die Fadenspule (30, 130) in einen ersten, oberen Wickelabschnitt (33, 133) und einen zweiten, unteren Wickelabschnitt (34, 134) aufteilt, und mit einem in der Trennwand (35, 135) ausgebildeten, fadenführenden Fadenkanal (40, 40', 140, 140'), der einen im Rand (37, 137) der Trennwand (35, 135) liegenden, fadenführenden Fadeneintrittsabschnitt (41, 41', 141,141') aufweist, und der fadenführende Fadeneintrittsabschnitt (41, 41', 141, 141') des Fadenkanals (40, 40') eine Längsmittelachse (42, 42', 142, 142') aufweist, und die Längsmittelachse (42, 42', 142, 142') des Fadeneintrittsabschnitts (41, 41', 141, 141') auf einer ersten Radialen (R1) liegt, die durch die Drehachse (18, 118) der Nabe (32, 132) verläuft, und die gedachte Verlängerung der Längsmittelachse (42, 42', 142, 142') des Fadeneintrittsabschnitts (41, 41', 141, 141') in einer vorgegebenen Drehlage der Fadenspule (30, 130) durch die Wandöffnung (20, 120) in der Umfangswand (14, 114) des Gehäuses (11, 111) verläuft, wobei sich der fadenführende Fadenkanal (40, 40') ausgehend von dem fadenführenden Fadeneintrittsabschnitt (41, 41', 141, 141') an der Nabe (32, 132) vorbei bis zu einem gegenüberliegenden fadenführenden Fadenaustrittsabschnitt (43, 43', 143, 143') im Rand (37, 137) der Trennwand (35, 135) erstreckt, und dem fadenführenden Fadenaustrittsabschnitt (43, 43', 143, 143') eine weitere Wandöffnung (22, 122) in der Umfangswand (14, 114) des Gehäuses (11, 111) zugeordnet ist,
**dadurch gekennzeichnet, dass** der fadenführende Fadenaustrittsabschnitt (43, 43', 143, 143') zu der Längsmittelachse (42, 42', 142, 142') des fadenführenden Fadeneintrittsabschnitts (41, 41', 141, 141') in Umfangsrichtung der Nabe (32, 132) einen Versatz (v) aufweist, wobei die Mündung (45, 145) des Fadeneintrittsabschnitts (41, 41', 141, 141') und die Mündung (47, 147) des Fadenaustrittsabschnitts (43, 43', 143, 143') innerhalb des Außendurchmessers (A) der Trennwand (35, 135) liegen, und zwischen einer Mündung (45, 145, 47, 147) und dem Außendurchmesser (A) der Trennwand (35, 135) in der Trennwand (35, 135) ein fadenführungsfreier Durchgangsraum (46, 146, 48, 148) ausgebildet ist.

2. Fadenmähkopf nach Anspruch 1,
**dadurch gekennzeichnet, dass** der Fadeneintrittsabschnitt (41, 41', 141, 141') und/oder der Fadenaustrittsabschnitt (43, 43', 143, 143') als geradliniger Kanalabschnitt ausgebildet ist.

3. Fadenmähkopf nach Anspruch 1 oder 2,
**dadurch gekennzeichnet, dass** die Längsmittelachse (42, 42', 142, 142') des Fadeneintrittsabschnitt (41, 41', 141, 141') und eine Längsmittelachse (44, 44', 144, 144') des Fadenaustrittsabschnitts (43, 43', 143, 143') in der Ebene (36, 136) der Trennwand (35, 135) einen Abstand (a) voneinander aufweisen.

4. Fadenmähkopf nach einem der Ansprüche 1 bis 3,
**dadurch gekennzeichnet,**
- **dass** die Mündung (45) des Fadeneintrittsabschnitts (41) und die Mündung (47) des Fadenaustrittsabschnitts (43) jeweils ein Zentrum (49, 50) aufweisen;
- **dass** eine erste Radiale (R1) von der Drehachse (18) der Nabe (32) durch das Zentrum (49) der Mündung (45) des Fadeneintrittsabschnitts (41) verläuft;
- **dass** eine zweite Radiale (R2) von der Drehachse (18) der Nabe (32) durch das Zentrum (50) der Mündung (47) des Fadenaustrittsabschnitts (43) verläuft;
- **dass** die Wandöffnungen (20, 22) auf einer Verbindungslinie (85) liegen, die durch die Drehachse (18) der Nabe (32) verläuft;
- **dass** zwischen der ersten Radialen (R1) und der Verbindungslinie (85) ein Eintrittswinkel (βₑ) ausgebildet ist;
- **dass** zwischen der zweiten Radialen (R2) und der Verbindungslinie (85) ein Austrittswinkel (βₐ) ausgebildet ist
- und **dass** der Eintrittswinkel (βₑ) ungleich dem Austrittswinkel (βₐ) ausgebildet ist.

5. Fadenmähkopf nach Anspruch 4,
**dadurch gekennzeichnet, dass** der Eintrittswinkel (βₑ) kleiner als der Austrittswinkel (βₐ) ausgebildet ist, wobei der Eintrittswinkel (βₑ) vorzugsweise Null ist.

6. Fadenmähkopf nach einem der Ansprüche 1 bis 5,
**dadurch gekennzeichnet, dass** in Umfangsrichtung der Nabe (32, 132) gesehen, der Durchgangsraum (46, 146, 48, 148) breiter ausgebildet ist als die in gleicher Umfangsrichtung gemessene Breite der Mündung (45) des Fadeneintrittsabschnitts (41) und/oder des Fadenaustrittsabschnitts (43).

7. Fadenmähkopf nach einem der Ansprüche 1 bis 6,
**dadurch gekennzeichnet, dass** der Fadeneintrittsabschnitt (41, 141) und der Fadenaustrittsabschnitt (43, 143) durch einen in der Ebene (36, 136) der Trennwand (35, 135) gebogenen Kanalabschnitt (38, 138) miteinander verbunden sind, wobei der Biegeradius des gebogenen Kanalabschnitts (38, 138) größer ist als der Innenradius der Nabe (32, 132).

8. Fadenmähkopf nach einem der Ansprüche 1 bis 7,
**dadurch gekennzeichnet, dass** ein zweiter Fadenkanal (40', 140') mit einem zweiten Fadeneintrittsabschnitt (41', 141') und einem zweiten Fadenaustrittsabschnitt (43', 143') vorgesehen ist, und sich der zweite Fadenkanal (40', 140') in der Trennwand (35, 135) der Fadenspule (30, 130) von der zweiten weiteren Wandöffnung (22, 122) bis zur ersten Wandöffnung (20, 120) erstreckt, wobei in der Ebene (36, 136) der Trennwand (35, 135) die Nabe (32, 132) zwischen den Fadenkanälen (40, 40', 140, 140') liegt.

9. Fadenmähkopf nach Anspruch 8,
**dadurch gekennzeichnet, dass** der Fadenaustrittsabschnitt (43, 143) des einen Fadenkanals (40, 140) und der Fadeneintrittsabschnitt (41, 141) des anderen Fadenkanals (40', 140') vor einer Wandöffnung (22, 122) in Umfangsrichtung der Trennwand (35, 135) nebeneinander liegen.

10. Fadenmähkopf nach einem der Ansprüche 1 bis 9,
**dadurch gekennzeichnet, dass** in der Ebene (36) der Trennwand (35) neben dem Fadeneintrittsabschnitt (41, 41') eines Fadenkanals (40, 40') ein Fadenhilfsaustritt (52, 52') des gleichen Fadenkanals (40, 40') vorgesehen ist, wobei eine Längsmittelachse (53) des Fadenhilfsaustritts (52) parallel zur Längsmittelachse (42) des Fadeneintrittsabschnitts (41) liegt.

11. Fadenmähkopf nach Anspruch 10,
**dadurch gekennzeichnet, dass** der Fadenhilfsaustritt (52) durch einen geradlinigen Kanalabschnitt des Fadenkanals (40, 40') gebildet ist.

12. Fadenmähkopf nach Anspruch 10 oder 11,
**dadurch gekennzeichnet, dass** der Fadeneintrittsabschnitt (41, 41') und der Kanalabschnitt des Fadenhilfsaustritts (52, 52') über eine gemeinsame Kanalerweiterung (54, 54') in den Fadenkanal (40, 40') übergehen.

13. Fadenmähkopf nach einem der Ansprüche 8 bis 12,
**dadurch gekennzeichnet, dass** jeder Fadenkanal (140, 140') an ein und derselben Wandöffnung (120, 122) einen Fadeneintrittsabschnitt (141, 141') aufweist und die gedachte Verlängerung der Längsmittelachse (142, 142') des Fadeneintrittsabschnitts (141, 141') durch die Wandöffnung (120, 122) in der Umfangswand (114) des Gehäuses (111) verläuft.

14. Fadenmähkopf nach Anspruch 13,
**dadurch gekennzeichnet, dass** der Fadeneintrittsabschnitt (141) des ersten Fadenkanals (140) und der Fadeneintrittsabschnitt (141') des zweiten Fadenkanals (140') vor einer Wandöffnung (120, 122,) einen gemeinsamen Zentraleintritt (60) bilden.

15. Fadenmähkopf nach Anspruch 14,
**dadurch gekennzeichnet, dass** der Zentraleintritt (60) über eine Kanalverzweigung (61) und einen Abweiser (62) in einen Fadenkanal (140, 140') übergeht.

16. Fadenmähkopf nach Anspruch 1,
**dadurch gekennzeichnet, dass** in der Wandöffnung (120, 122) eine Führungsbuchse (70) mit einer Fadendurchtrittsöffnung (129) gehalten ist, wobei die Führungsbuchse (70) auf ihrer dem Rand (137) der Trennwand (135) zugewandten Innenseite mit einer Fangkontur (71) ausgebildet ist.

17. Fadenmähkopf nach Anspruch 16,
**dadurch gekennzeichnet, dass** die Fangkontur (71) eine Öffnungsweite (F) aufweist, die zumindest einen Fadeneintrittsabschnitt (141, 141') und einen Fadenaustrittsabschnitt (143, 143') überdeckt.

18. Fadenmähkopf nach Anspruch 16 oder 17,
**dadurch gekennzeichnet, dass** die Fangkontur (71) zwei in Hochrichtung der Nabe (132) verlaufende Längsrippen (72) aufweist, die bis vor den Rand (137) der Trennwand (135) ragen.

19. Fadenmähkopf nach Anspruch 16 oder 17,
**dadurch gekennzeichnet, dass** eine Innenwand der Fadendurchtrittsöffnung (129) in der Führungsbuchse (70) als Doppelkegel ausgebildet ist, der sich nach innen und nach außen erweitert.

## Claims

1. String mower head for mounting on the drive shaft (10) of a string mower, consisting of a beaker-shaped housing (11, 111) with a circumferential wall (14, 114), wherein a first wall opening (20, 120) for a cutting string (7) is provided in the circumferential wall (14, 114), with a string reel (30, 130) located in the housing (11, 111) for the cutting string (7), wherein the string reel (30, 130) is rotatable relative to the housing (11, 111) and has a hub (32, 132) with an axis of rotation (18, 118) and wherein a disc-shaped partition (35, 135) having a maximum outer diameter (A) is located on the hub (32, 132), wherein the partition (35, 135) divides the string reel (30, 130) into a first, upper reel section (33, 133) and a second, lower reel section (34, 134), and with a string-guidance string channel (40, 40', 140, 140') formed in the partition (35, 135) and having a string-guidance string entry section (41, 41', 141, 141') lying in the edge (37, 137) of the partition (35, 135), wherein the string-guidance string entry section (41, 41', 141, 141') of the string channel (40, 40') has a longitudinal central axis (42, 42', 142, 142') and the longitudinal central axis (42, 42', 142, 142') of the string entry section (41, 41', 141, 141') lies on a first radial (R1) extending through the axis of rotation (18, 118) of the hub (32, 132) and the notional extension of the longitudinal central axis (42, 42', 142, 142') of the string entry section (41, 41', 141, 141') extends through the wall opening (20, 120) in the circumferential wall (14, 114) of the housing (11, 111) in a predetermined rotary position of the string reel (30, 130), wherein the string-guidance string channel (40, 40') extends from the string-guidance string entry section (41, 41', 141, 141') past the hub (32, 132) to an opposite string-guidance string exit section (43, 43', 143, 143') in the edge (37, 137) of the partition (35, 135) and wherein a further wall opening (22, 122) in the circumferential wall (14, 144) of the housing (11, 111) is assigned to the string-guidance string exit section (43, 43', 143, 143'), **characterised in that** the string-guidance string exit section (43, 43', 143, 143') has an offset (v) relative to the longitudinal central axis (42, 42', 142, 142') of the string-guidance string entry section (41, 41', 141, 141') in the circumferential direction of the hub (32, 132), wherein the orifice (45, 145) of the string entry section (41, 41', 141, 141') and the orifice (47, 147) of the string exit section (43, 43', 143, 143') lie within the outer diameter (A) of the partition (35, 135) and a string guidance-free through-space (46, 146, 48, 148) is formed in the partition (35, 135) between an orifice (45, 145, 47, 147) and the outer diameter (A) of the partition (35, 135).

2. String mower head according to claim 1,
**characterised in that** the string entry section (41, 41', 141, 141') and/or the string exit section (43, 43', 143, 143') is/are designed as a straight channel.

3. String mower head according to claim 1 or 2,
**characterised in that** the longitudinal central axis (42, 42', 142, 142') of the string entry section (41, 41', 141, 141') and a longitudinal central axis (44, 44' 144, 144') of the string exit section (43, 43', 143, 143') have a distance (a) from each other in the plane (36, 136) of the partition (35, 135).

4. String mower head according to any of claims 1 to 3,
**characterised in that**
- the orifice (45) of the string entry section (41) and the orifice (47) of the string exit section (43) have a centre (49, 50) each;
- a first radial (R1) extends from the axis of rotation (18) of the hub (32) through the centre (45) of the orifice (45) of the string entry section (41);
- a second radial (R2) extends from the axis of rotation (18) of the hub (32) through the centre (50) of the orifice (47) of the string exit section (43)'
- the wall openings (20, 22) lie on a connecting line (85) extending through the axis of rotation (18) of the hub (32);
- an entry angle (βₑ) is formed between the first radial (R1) and the connecting line (85);
- an exit angle (βₐ) is formed between the second radial (R2) and the connecting line (85); and
- the entry angle (βₑ) is unequal to the exit angle (βₐ).

5. String mower head according to claim 4,
**characterised in that** the entry angle (βₑ) is smaller than the exit angle (βₐ), the entry angle (βₑ) being preferably zero.

6. String mower head according to any of claims 1 to 5,
**characterised in that**, if viewed in the circumferential direction of the hub (32, 132), the through-space (46, 146, 48, 148) is wider than the width of the orifice (45) of the string entry section (41) and/or of the string exit section (43) as measured in the same circumferential direction.

7. String mower head according to any of claims 1 to 6,
**characterised in that** the string entry section (41, 141) and the string exit section (43, 143) are connected to each other by a channel section (38, 138) curved in the plane (36, 136) of the partition (35, 135), the radius of curvature of the curved channel section (38, 138) being larger than the inner radius of the hub (32, 132).

8. String mower head according to any of claims 1 to 7,
**characterised in that** a second string channel (41', 141') with a second string entry section (41', 141') and a second string exit section (43', 143') is provided and the second string channel (41', 141') extends in the partition (35, 135) of the string reel (30, 130) from the second further wall opening (22, 122) to the first wall opening (20, 120), the hub (32, 132) lying between the string channels (40, 40', 140, 140') in the plane (36, 136) of the partition (35, 135).

9. String mower head according to claim 8,
**characterised in that** the string exit section (43, 143) of the one string channel (40, 140) and the string entry section (41, 141) of the other string channel (41', 141') are located adjacent to each other in front of a wall opening (22, 122) in the circumferential direction of the partition (35, 135).

10. String mower head according to any of claims 1 to 9,
**characterised in that** in the plane (36) of the partition (35) there is provided adjacent to the string entry section (41, 41') of a string channel (40, 40') a string auxiliary exit (52, 52') of the same string channel (40, 40'), a longitudinal central axis (53) of the string auxiliary exit (52) lying parallel to the longitudinal central axis (42) of the string entry section (41).

11. String mower head according to claim 10,
**characterised in that** the string auxiliary exit (52) is represented by a straight channel section of the string channel (40, 40').

12. String mower head according to claim 10 or 11,
**characterised in that** the string entry section (41, 41') and the channel section of the string auxiliary exit (52, 52') merge into the string channel (40, 40') via a common channel widening (54, 54').

13. String mower head according to any of claims 8 to 12,
**characterised in that** each string channel (140, 140') has a string entry section (141, 141') at one and the same wall opening (120, 122) and the notional extension of the longitudinal central axis (142, 142') of the string entry section (141, 141') extends through the wall opening (120, 122) in the circumferential wall (114) of the housing (111).

14. String mower head according to claim 13,
**characterised in that** the string entry section (141) of the first string channel (140) and the string entry section (141') of the second string channel (140') form a common central entry (60) in front of a wall opening (120, 122).

15. String mower head according to claim 14,
**characterised in that** the central entry (60) merges into a string channel (140, 140') via a channel branch (61) and a deflector (62).

16. String mower head according to claim 1,
**characterised in that** a guide bushing (70) with a string through-opening (129) is held in the wall opening (120, 122), wherein the guide bushing (70) is provided with an interceptor contour (71) on its inside facing the edge (137) of the partition (135).

17. String mower head according to claim 16,
**characterised in that** the interceptor contour (71) has an opening angle (F) which covers at least one string entry section (141, 141') and one string exit section (143, 143').

18. String mower head according to claim 16 or 17,
**characterised in that** the interceptor contour (71) has two longitudinal ribs (72), which extend in the vertical direction of the hub (132) and project in front of the edge (137) of the partition (135).

19. String mower head according to claim 16 or 17,
**characterised in that** an inner wall of the string through-opening (129) in the guide bushing (70) is designed as a double cone widening towards the inside and the outside.

## Revendications

1. Tête faucheuse à fil à monter sur l'arbre d'entraînement (10) d'une débroussailleuse (1), composée d'un boîtier en forme de godet (11, 111) avec une paroi périphérique (14, 114), un premier orifice de paroi (20, 120) pour un fil de coupe (7) étant formé dans la paroi périphérique (14, 114), avec une bobine de fil (30, 130), disposée dans le boîtier (11, 111), pour le fil de coupe (7), ladite bobine de fil (30, 130) étant apte à tourner par rapport au boîtier (11, 111) et comportant un moyeu (32, 132) avec un axe de rotation (18, 118), et une cloison en forme de plaque (35, 135) qui présente un diamètre extérieur maximal (A) étant disposée sur le moyeu (32, 132), ladite cloison (35, 135) divisant la bobine de fil (30, 130) en une première section d'enroulement supérieure (33, 133) et une seconde section d'enroulement inférieure (34, 134), et avec un conduit de guidage de fil (40, 40', 140, 140') qui est formé dans la cloison (35, 135) et qui présente une section d'entrée de guidage de fil (41, 41', 141, 141') située dans le bord (37, 137) de la cloison (35, 135), et la section d'entrée de guidage de fil (41, 41', 141, 141') du conduit de fil (40, 40') présentant un axe longitudinal médian (42, 42', 142, 142'), et l'axe longitudinal médian (42, 42', 142, 142') de la section d'entrée de fil (41, 41', 141, 141') se trouvant sur un premier rayon (R1) qui traverse l'axe de rotation (18, 118) du moyeu (32, 132), et le prolongement imaginaire de l'axe longitudinal médian (42, 42', 142, 142') de la section d'entrée de fil (41, 41', 141, 141'), dans une position de rotation prédéfinie de la bobine de fil (30, 130), traversant l'orifice de paroi (20, 120) prévu dans la paroi périphérique (14, 114) du boîtier (11, 111), le conduit de guidage de fil (40, 40'), à partir de la section d'entrée de guidage de fil (41, 41', 141, 141'), passant devant le moyeu (32, 132) et s'étendant jusqu'à une section de sortie de guidage de fil (43, 43', 143, 143') opposée prévue dans le bord (37, 137) de la cloison (35, 135), et un autre orifice de paroi (22, 122) étant associé, dans la paroi périphérique (14, 114) du boîtier (11, 111), à la section de sortie de guidage de fil (43, 43', 143, 143'),
**caractérisée en ce que** la section de sortie de guidage (43, 43', 143, 143') présente un décalage (v) par rapport à l'axe longitudinal médian (42, 42', 142, 142') de la section d'entrée de guidage de fil (41, 41', 141, 141') dans le sens périphérique du moyeu (32, 132), l'ouverture (45, 145) de la section d'entrée de fil (41, 41', 141, 141') et l'ouverture (47, 147) de la section de sortie de fil (43, 43', 143, 143') se trouvant à l'intérieur du diamètre extérieur (A) de la cloison (35, 135), et un espace de passage sans guidage de fil (46, 146, 48, 148) étant formé dans la cloison (35, 135), entre une ouverture (45, 145, 47, 147) et le diamètre extérieur (A) de ladite cloison (35, 135).

2. Tête faucheuse à fil selon la revendication 1,
**caractérisée en ce que** la section d'entrée de fil (41, 41', 141, 141') et/ou la section de sortie de fil (43, 43', 143, 143') est conçue comme une section de conduit rectiligne.

3. Tête faucheuse à fil selon la revendication 1 ou 2,
**caractérisée en ce que** l'axe longitudinal médian (42, 42', 142, 142') de la section d'entrée de fil (41, 41', 141, 141') et un axe longitudinal médian (44, 44', 144, 144') de la section de sortie de fil (43, 43', 143, 143') présentent dans le plan (36, 136) de la cloison (35, 135) un écartement (a).

4. Tête faucheuse à fil selon l'une des revendications 1 à 3,
**caractérisée**
- **en ce que** l'ouverture (45) de la section d'entrée de fil (41) et l'ouverture (47) de la section de sortie de fil (43) présentent chacune un centre (49, 50);
- **en ce qu'**un premier rayon (R1) part de l'axe de rotation (18) du moyeu (32) et traverse le centre (49) de l'ouverture (45) de la section d'entrée de fil (41);
- **en ce qu'**un second rayon (R2) part de l'axe de rotation (18) du moyeu (32) et traverse le centre (50) de l'ouverture (47) de la section de sortie de fil (43);
- **en ce que** les orifices de paroi (20, 22) sont situés sur une ligne de liaison (85) qui traverse l'axe de rotation (18) du moyeu (32);
- **en ce qu'**un angle d'entrée (βₑ) est formé entre le premier rayon (R1) et la ligne de liaison (85);
- **en ce qu'**un angle de sortie (βₐ) est formé entre le second rayon (R2) et la ligne de liaison (85)
- et **en ce que** l'angle d'entrée (βₑ) n'est pas égal à l'angle de sortie (βₐ).

5. Tête faucheuse à fil selon la revendication 4,
**caractérisée en ce que** l'angle d'entrée (βₑ) est inférieur à l'angle de sortie (βₐ), l'angle d'entrée (βₑ) étant de préférence nul.

6. Tête faucheuse à fil selon l'une des revendications 1 à 5,
**caractérisée en ce que** vu dans le sens périphérique du moyeu (32, 132), l'espace de passage (46, 146, 48, 148) est plus large que la largeur, mesurée dans le même sens périphérique, de l'ouverture (45) de la section d'entrée de fil (41) et/ou de la section de sortie de fil (43).

7. Tête faucheuse à fil selon l'une des revendications 1 à 6,
**caractérisée en ce que** la section d'entrée de fil (41, 141) et la section de sortie de fil (43, 143) sont reliées entre elles par une section de conduit (38, 138) qui est courbe dans le plan (36, 136) de la cloison (35, 135), le rayon de courbure de ladite section de conduit courbe (38, 138) étant plus grand que le rayon intérieur du moyeu (32, 132).

8. Tête faucheuse à fil selon l'une des revendications 1 à 7,
**caractérisée en ce qu'**il est prévu un second conduit de fil (40', 140') avec une seconde section d'entrée de fil (41', 141') et une seconde section de sortie de fil (43', 143), et le second conduit de fil (40', 140') s'étend dans la cloison (35, 135) de la bobine de fil (30, 130) du second orifice de paroi (22, 122) jusqu'au premier orifice de paroi (20, 120), étant précisé que dans le plan (36, 136) de la cloison (35, 135), le moyeu (32, 132) se trouve entre les conduits de fil (40, 40', 140, 140').

9. Tête faucheuse à fil selon la revendication 8,
**caractérisée en ce que** la section de sortie de fil (43, 143) d'un conduit de fil (40, 140) et la section d'entrée (41, 141) de l'autre conduit de fil (40', 140'), devant un orifice de paroi (22, 122), se trouvent l'un à côté de l'autre, dans le sens périphérique de la cloison (35, 135).

10. Tête faucheuse à fil selon l'une des revendications 1 à 9,
**caractérisée en ce que** près de la section d'entrée de fil (41, 41') d'un conduit de fil (40, 40'), dans le plan (36) de la cloison (35), il est prévu une sortie auxiliaire de fil (52, 52') du même conduit de fil (40, 40'), un axe longitudinal médian (53) de ladite sortie auxiliaire de fil (52) étant parallèle à l'axe longitudinal médian (42) de la section d'entrée de fil (41).

11. Tête faucheuse à fil selon la revendication 10,
**caractérisée en ce que** la sortie auxiliaire de fil (52) est formée par une section rectiligne du conduit de fil (40, 40').

12. Tête faucheuse à fil selon la revendication 10 ou 11,
**caractérisée en ce que** la section d'entrée de fil (41, 41') et la section de conduit de la sortie auxiliaire de fil (52, 52') se prolongent, par l'intermédiaire d'un élargissement commun de conduit (54, 54'), par le conduit de fil (40, 40').

13. Tête faucheuse à fil selon l'une des revendications 8 à 12,
**caractérisée en ce que** chaque conduit de fil (140, 140') comporte sur un même orifice de paroi (120, 122) une section d'entrée de fil (141, 141'), et le prolongement imaginaire de l'axe longitudinal médian (142, 142') de la section d'entrée de fil (141, 141') traverse l'orifice de paroi (120, 122) dans la paroi périphérique (114) du boîtier (111).

14. Tête faucheuse à fil selon la revendication 13,
**caractérisée en ce que** la section d'entrée de fil (141) du premier conduit de fil (140) et la section d'entrée de fil (141') du second conduit de fil (140') forment devant un orifice de paroi (120, 122) une entrée centrale commune (60).

15. Tête faucheuse à fil selon la revendication 14,
**caractérisée en ce que** l'entrée centrale (60) se prolonge, par l'intermédiaire d'un embranchement de conduit (61) et d'une chicane (62), par un conduit de fil (140, 140').

16. Tête faucheuse à fil selon la revendication 1,
**caractérisée en ce que** dans l'orifice de paroi (120, 122) est retenu un manchon de guidage (70) avec un orifice de passage de fil (129), le manchon de guidage (70) étant pourvu, sur son côté intérieur tourné vers le bord (137) de la cloison (135), d'un contour de blocage (71).

17. Tête faucheuse à fil selon la revendication 16,
**caractérisée en ce que** le contour de blocage (71) présente une largeur d'ouverture (F) qui couvre au moins une section d'entrée de fil (141, 141') et une section de sortie de fil (143, 143').

18. Tête faucheuse à fil selon la revendication 16 ou 17,
**caractérisée en ce que** le contour de blocage (71) présente deux nervures longitudinales (72) qui s'étendent dans le sens vertical du moyeu (132) et qui vont jusqu'au bord (137) de la cloison (135).

19. Tête faucheuse à fil selon la revendication 16 ou 17,
**caractérisée en ce qu'**une paroi intérieure de l'orifice de passage de fil (129) dans le manchon de guidage (70) est conçue comme un cône double qui s'élargit vers l'intérieur et vers l'extérieur.
